Europäisches Patentamt

European Patent Office

Office européen des brevets

(19)

(11) Veröffentlichungsnummer: **0 029 485**
**B1**

(12) **EUROPÄISCHE PATENTSCHRIFT**

(45) Veröffentlichungstag der Patentschrift:
09.05.84

(51) Int. Cl.³: **G 01 F 23/26**

(21) Anmeldenummer: 80104801.8

(22) Anmeldetag: 14.08.80

(54) Einrichtung zur kapazitiven Füllstandsmessung.

(30) Priorität: 14.11.79 DE 2945965

(43) Veröffentlichungstag der Anmeldung:
03.06.81 Patentblatt 81/22

(45) Bekanntmachung des Hinweises auf die Patenterteilung:
09.05.84 Patentblatt 84/19

(84) Benannte Vertragsstaaten:
DE FR GB IT NL SE

(56) Entgegenhaltungen:
DE - A - 1 648 153
DE - A - 2 521 687
US - A - 3 167 959
US - A - 3 534 606
US - A - 3 801 902

SOVIET JOURNAL OF INSTRUMENTATION AND
CONTROL, Nr. 11, November '68, Oxford, GB G.N.
BOBROVNIKOV et al.: "Reducing the error of a
capacitative level meter by selection of the supply
frequency", Seiten 14-16

(73) Patentinhaber: VDO Adolf Schindling AG,
Gräfstrasse 103, D-6000 Frankfurt/Main (DE)

(72) Erfinder: Kühnel, Frank, Bremer Strasse 2-6,
D-6236 Eschborn (DE)

(74) Vertreter: Könekamp, Herbert, Dipl.-Ing., Sodener
Strasse 9, D-6231 Schwalbach (DE)

## Beschreibung

Die Erfindung geht aus von einer Einrichtung zur kapazitiven Füllstandsmessung nach dem Oberbegriff des Patentanspruchs 1. Eine solche Einrichtung ist aus der US-A-3 167 959 bekannt.

Bei einer derartigen Einrichtung sind dem Messkondensator mehrere Kompensationskondensatoren und Widerstände zur Kompensation unterschiedlicher Dielektrizitätskonstanten und der Leitfähigkeit des Mediums zugeordnet und in einer Brückenschaltung verschaltet. Messfehler, die auf unterschiedliche elektrische Leitwerte der zu messenden Medien zurückzuführen sind, also beispielsweise auf einen unterschiedlich hohen Methanolgehalt im Kraftstoff für Kraftfahrzeuge, können dadurch ebenso eliminiert werden wie Messfehler, die auf unterschiedlichen Dielektrizitätskonstanten des Mediums beruhen. Von Nachteil ist bei dieser Einrichtung, dass sie verhältnismässig aufwendig ist — sie benötigt einen Transformator und einen Stellmotor zur Verstellung der Brücke. Dies und das dadurch bedingte grosse Bauvolumen beschränken das Einsatzgebiet dieser Einrichtungen beträchtlich.

Es ist des weiteren eine Einrichtung zum Erfassen des Gewichts von in einem Tank befindlichem Kraftstoff bekannt (US-A-3 801 902), bei der das Kraftstoffvolumen gemäss der Beziehung

$$V = \frac{C_T - C_B}{C_R + C_K}$$

ermittelt wird. Hierbei ist $C_T$ die füllstandsabhängige Kapazität des Messkondensators, $C_B$ die Kapazität eines ersten Kompensationskondensators, die gleich der Kapazität des Messkondensators ist, wenn dieser mit Luft gefüllt ist, $C_R$ die Kapazität eines zweiten Kompensationskondensators, dessen Kapazität sich mit der Dichte des Mediums verändert, und $C_K$ die Kapazität eines dritten gerätebedingten Kompensationskondensators. Eine solche Einrichtung liefert Messergebnisse, die frei von Fehlern aufgrund von Streukapazitäten und schwankender Dichte des Mediums sind. Auch diese Einrichtung ist verhältnismässig aufwendig.

Aufgabe der Erfindung ist es, eine Einrichtung zur kapazitiven Füllstandsmessung zu schaffen, die bei möglichst geringem Aufwand die Eliminierung unterschiedlicher Dielektrizitätskonstanten und unterschiedlicher Leitwerte des zu messenden Mediums in der Messung gestattet.

Diese Aufgabe wird erfindungsgemäss für eine Einrichtung der eingangs genannten Gattung durch die in dem kennzeichnenden Teil des Patentanspruchs 1 angegebenen Merkmale gelöst.

Bei einer solchen Einrichtung hat sowohl die Dielektrizitätskonstante als auch der Leitwert des zu messenden Mediums keinen Einfluss auf das Messergebnis mehr, so dass die Füllstände von Medien stark wechselnder Stoffeigenschaften zuverlässig gemessen werden können.

Die erfindungsgemässe Einrichtung arbeitet auf dem Prinzip, dass bei der Multiplikation des Spannungsabfalls an dem Messwiderstand, der dem durch den Kondensator gehenden Strom proportional ist, mit der um 90° gegenüber der Speisespannung verschobenen Sinusspannung eine resultierende Spannung auftritt, die einen Gleichspannungsteil einer dem Messwiderstand proportionalen Grösse, aber ohne Einfluss der elektrischen Leitfähigkeit des Messwiderstands, und wenigstens einen Wechselspannungsanteil einer doppelten Frequenz wie die Speisespannung aufweist, der zwar durch den elektrischen Leitwert des Messkondensators beeinflusst wird, aber durch den Tiefpass — zusammen mit einem anderen Wechselspannungsanteil — ausgefiltert wird, so dass er nicht in das Messergebnis eingeht.

In dieser Einrichtung hängt also die Eliminierung des störenden Einflusses des elektrischen Leitwerts des Mediums nur davon ab, wie gut die Wechselspannungskomponenten in der Einrichtung unterdrückt werden. Eine solche Unterdrückung ist aber leicht möglich, da die Wechselspannungsanteile eine verhältnismässig hohe Frequenz haben. Als besonders zweckmässig hat es sich erwiesen, dass Wechselspannungsmultiplikatoren mit einem Tiefpass mit einer Eckfrequenz kleiner als die doppelte Frequenz der Spannung der Sinusspannungsquelle vorgesehen sind. Dadurch lässt sich der Wechselspannungsanteil besonders gut ausfiltern. Der Aufwand für diese Einrichtung kann daher unter Berücksichtigung der zu erreichenden exakten Messung gering gehalten werden. Es werden somit Spannungen gebildet, die nur von der Kapazität des gemessenen Kondensators, insbesondere des Messkondensators und ersten Kompensationskondensators abhängen und die zur Bildung einer dem Füllstand entsprechenden Grösse miteinander verknüpft werden können.

In einer bevorzugten Ausführungsform der Erfindung ist die Auswerteschaltung gemäss den Merkmalen des Anspruchs 4 ausgebildet. Die Auswerteschaltung umfasst im wesentlichen zwei Differenzverstärker zur Bildung der Differenzen entsprechend dem Zähler und dem Nenner der im Anspruch 1 angegebenen Beziehung sowie einen dritten Differenzverstärker, in dem die Differenz zwischen einer dem Nenner der Beziehung entsprechenden Spannung und einer Referenzspannung gebildet wird. Die Referenzspannung kann dabei vorzugsweise etwa halb so gross wie die Speisespannung, d.h. die Spannung der Sinusspannungsquelle sein. Durch die Rückkopplung dieses dritten Differenzverstärkers zu dem Steuereingang des Regelverstärkers, der die Reihenschaltungen der Kondensatoren mit einem Messwiderstand speist, folgt die Quotientenbildung entsprechend der im Anspruch 1 angegebenen Beziehung. Durch diese Rückkopplung wird die Amplitude der verstärkten Speisespannung über den Regelverstärker stets so eingestellt, dass die Spannung entsprechend dem Nenner der oben angegebenen Beziehung gleich der Referenzspannung ist. Damit ist auch die Differenzspannung entsprechend dem Zähler der voranstehend angegebenen Beziehung bei maximalem Füllstand gleich der Referenzspannung, und zwar unabhängig von den Eigenschaften des zu messenden Mediums. Die Ausgangsspannung am Ausgang des ersten Differenzverstärkers wird Null, wenn die Differenzbildung des Zählers der oben genannten Beziehung Null ergibt, weil der erste Messkondensator vollständig ausserhalb des Mediums in Luft ist. Bei maximalem Füllstand ist dagegen die Differenz der Spannungen, die dem ersten Messkondensator und dem zweiten Kompensationskondensator entsprechend dem Zähler der oben genannten Beziehung proportional sind, gleich der Referenzspannung. Zwischen dem Wert Null und dem maximalen Wert gleich der Referenzspannung verläuft die Ausgangsspannung am Ausgang des ersten Differenzverstärkers linear.

Nach einem weiteren Gedanken der Erfindung wird die der Erfindung zugrundeliegende Aufgabe ausgehend von einer Einrichtung zur kapazitiven Füllstandsmessung, wie sie aus der US-A-3 167 959 bekannt ist, auch durch die im kennzeichnenden Teil des Patentanspruchs 2 angegebenen Merkmale gelöst.

Diese Einrichtung zeichnet sich durch ein einfaches Schaltungsprinzip aus, bei der durch die Wahl der Arbeitsfrequenz bzw. Speisefrequenz der Einfluss des elektrischen Leitwertes gering gehalten wird. Die Einrichtung arbeitet linear bei kleinen Phasenwinkeln bis etwa 15°.

Gemäss einer wegen ihrer Einfachheit vorteilhaften Ausführungsform der Erfindung ist die Auswerteschaltung zum Dividieren von Gleichspannungen ausgebildet und zwischen den Ausgängen der Logik-Glieder und der Auswerteschaltung je ein Integrator angeordnet.

Zwei Ausführungsformen der erfindungsgemässen Einrichtung werden im folgenden anhand der Zeichnung mit zwei Figuren beschrieben, in der zeigt:

Fig. 1 eine Einrichtung zur kapazitiven Niveaumessung, die mit Wechselspannungsmultiplikation und Tiefpass zur Unterdrückung von Wechselspannungsanteilen arbeitet, die durch unterschiedliche elektrische Leitwerte des Mediums beeinflusst werden und

Fig. 2 ein Blockschaltbild einer auf dem Prinzip der Phasenmessung arbeitenden Einrichtung zur kapazitiven Niveaumessung, in der Einfluss des elektrischen Leitwerts durch Wahl der Speisefrequenz gering gehalten wird.

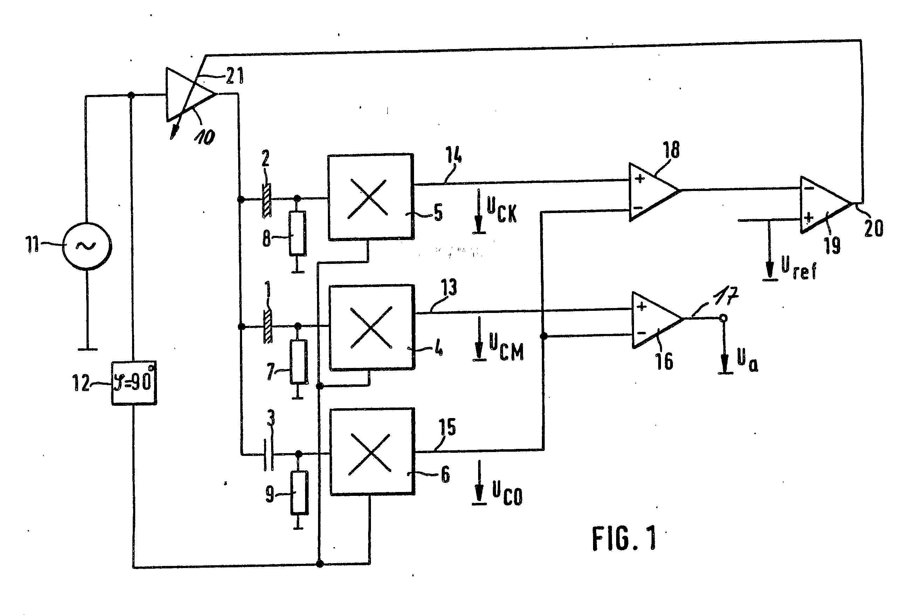

In Fig. 1 ist eine Schaltungsanordnung dargestellt, in der die Kapazität eines in das zu messende Medium tauchenden Messkondensators 1, eines vollständig in das zu messende Medium tauchenden ersten Kompensationskondensators 2 und eines zweiten Kompensationskondensators 3, dessen Kapazität gleich der Kapazität des Messkondensators und des ersten Kompensationskondensators, wenn diese sich in Luft befinden, ist, in proportionale Spannungen $U_{CM}$, $U_{CK}$ und $U_{CO}$ umgewandelt werden, wobei in diese Spannungen die elektrischen Leitwerte der Kondensatoren nicht eingehen.

Zur Umwandlung der Kapazitäten in Spannungen werden Synchrondemodulatoren verwendet, die aus je einem Wechselspannungsmultiplikator mit Tiefpasseigenschaften 4 bzw. 5 bzw. 6 bestehen. An jeden Eingang des Wechselspannungsmultiplikators ist ein Messwiderstand 7 bzw. 8 bzw. 9 angeschlossen, der jeweils mit einem der Kondensatoren 1 bzw. 2 bzw. 3 in Reihe liegt. Die Reihenschaltung jedes Kondensators mit einem Messwiderstand wird über einen Regelverstärker 10 von einer Sinusspannungsquelle 11 gespeist. Jeder zweite Eingang der Wechselspannungsmultiplikatoren 4, 5, 6 wird über einen Phasenschieber 12, der eine Sinusspannung mit einer gegenüber der Speisespannung gegenüber der Sinusspannungsquelle 11 um 90° verschobene Phasenlage liefert, beaufschlagt.

An den Ausgängen der Wechselspannungsmultiplikatoren mit Tiefpasseigenschaften 13, 14, 15 liegen Gleichspannungen $U_{CM}$, $C_{CK}$, $U_{CO}$ an, die den Kapazitäten $C_M$, $C_K$, $C_O$ des Messkondensators sowie des ersten und zweiten Kompensationskondensators proportional sind. Damit wird vorausgesetzt, dass die Amplituden der Speisespannungen mit denen die Reihenschaltungen der Kondensatoren mit den Messwiderständen gespeist werden und der phasenverschobenen Sinusspannung konstant sind, ebenso die Frequenz dieser Spannungen.

Die Ausgänge 13 und 15 sind an Eingänge eines ersten Differenzverstärkers 16 angeschlossen an dessen Ausgang 17 eine Ausgangsspannung $U_a$ gebildet wird, die dem Füllstand proportional ist, wie noch erläutert wird.

An einem zweiten Differenzverstärker 18 wird die Spannungsdifferenz $U_{CK} - U_{CO}$ gebildet, die in einen dritten Differenzverstärker 19 eingespeist und dort mit einer Referenzspannung verglichen wird. Der Ausgang 20 des dritten Differenzverstärkers ist zu einem Steuereingang 21 des Regelwiderstands 10 rückgekoppelt. Durch diese Rückkoppelung wird dafür gesorgt, dass die verstärkte Speisespannung am Ausgang des Regelverstärkers 10 immer so gross ist, dass die Differenz zwischen $U_{CK} - U_{CO}$ einerseits und der Referenzspannung andererseits Null ist. Da diese verstärkte Speisespannung auch den ersten Messkondensator und den Kompensationskondensator 3 speist, beeinflusst diese verstärkte Speisespannung proportional die Spannungsdifferenz $U_{CM} U_{CO}$, die in dem ersten Differenzverstärker gebildet wird, in der Weise, dass die Ausgangsspannung an dem Ausgang 17 proportional mit dem Quotienten

$$\frac{U_{CM} - U_{CO}}{U_{CK} - U_{CO}}$$

wird, der ein direktes Mass für den Füllstand ist.

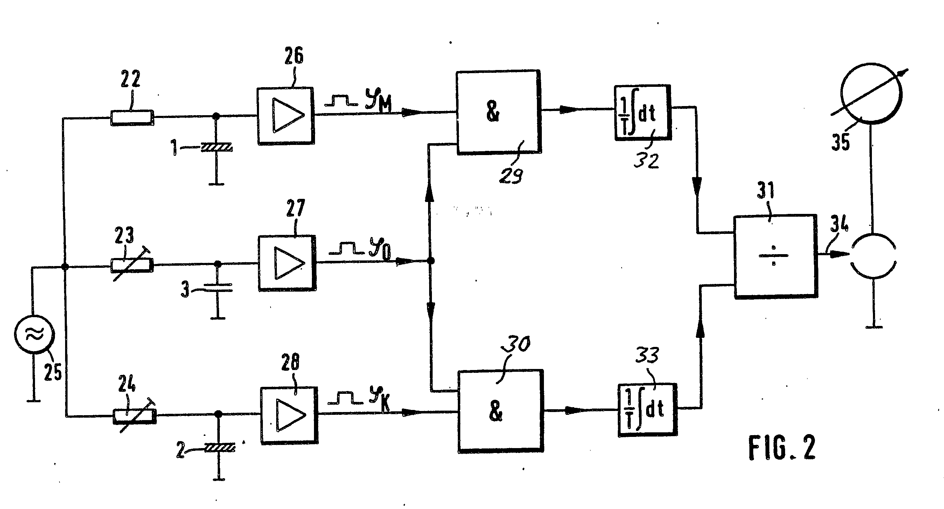

Aus Fig. 2 geht eine andere Realisierung der Einrichtung zur kapazitiven Füllstandsmessung hervor, die hier nach dem Prinzip der Phasenmessung arbeitet. Mit dieser Einrichtung wird ebenfalls eine feste Beziehung zwischen dem Füllstand h und der Kapazität CM des Messkondensators, der Kapazität CK des ersten Kompensationskondensators und der Kapazität CO des zweiten Kompensationskondensators gebildet.

Hierzu wird je eine Reihenschaltung des Messkondensators 1 bzw. des ersten Kompensationskondensators 2 bzw. des zweiten Kompensationskondensators 3 mit einem Vorwiderstand 22 bzw. 23 bzw. 24 mit einer Speisespannung, die von einem Sinusgenerator 25 abgegeben wird, beaufschlagt. Die Phasenverschiebung des an den Kondensatoren abgreifbaren Spannungsabfalls bezüglich der Speisespannung um den Phasenwinkel $\varphi$ ist für kleine Winkel $\varphi$ ungefähr gleich dem Produkt der Kapazität des Kondensators mit dem Vorwiderstand und der Kreisfrequenz. Es ist also der durch den Messkondensator gebildete Phasenwinkel $\varphi_M = \omega \cdot R_{22} \cdot C_M$, der durch den zweiten Kompensationskondensator $C_O$ hervorgerufene Phasenwinkel $\varphi_O$ ist $\omega \cdot R_{23} \cdot C_O$. Der Phasenwinkel $\varphi_K$ schliesslich ist $\omega \cdot R_{24} \cdot C_K$.

Die derart phasenverschobenen Sinusspannungen werden in Rechteckimpulsumformer 26, 27, 28 eingespeist. Die von diesen Rechteckimpulsumformern abgegebenen Rechteckimpulse sind ebenfalls um $\varphi_M$, $\varphi_O$ und $\varphi_K$ phasenverschoben.

In den sich an die Ausgänge der Rechteckimpulsumformer anschliessenden Logik-Gliedern, die als UND-Glieder ausgebildet sind, werden die Pulszüge von dem ersten und dem zweiten Rechteckimpulserzeuger miteinander verglichen, um so die Werte $\varphi_M - \varphi_O$ und $\varphi_K - \varphi_O$ zu bilden. In den Logik-Gliedern können damit in einfacher Weise die Differenzen der Phasenverschiebungen bzw. Phasenwinkel gebildet werden, da die Amplitude der Rechteckimpulse konstant bleibt. Demgemäss wird in dem Logik-Glied 29 die Beziehung $\varphi_M - \varphi_O$ gebildet und in dem Logikelement 30 die Beziehung $\varphi_K - \varphi_O$. Diese Grössen stellen Rechteckimpulse einer Länge dar, die von dem unterschiedlichen Phasenwinkel der beiden Rechteckimpulse am Eingang der Logik-Glieder abhängt.

Die von den Logik-Gliedern 29 und 30 abgegebenen Rechteckimpulse, die der Phasendifferenz $\varphi_M - \varphi_O$ bzw. $\varphi_K - \varphi_O$ entsprechen, werden in der Divisionsschaltungsanordnung 31 dividiert, um die Beziehung

$$\frac{\varphi_M - \varphi_O}{\varphi_K - \varphi_O}$$

zu bilden, die proportional der Füllhöhe ist. In diese Beziehung gehen Abweichungen des Dielektrizitätsmoduls und der elektrischen Leitfähigkeit nicht ein.

Da die Divisionsschaltungsanordnung 31 zweckmässig zur Verarbeitung von Gleichspannungssignalen eingerichtet ist, werden die Rechteckimpulse, die von den Logik-Gliedern 29 und 30 abgegeben werden, in Integrationsschaltungsanordnungen 32 und 33 integriert.

Durch die Wahl der Frequenz, mit der der Sinusgenerator 25 schwingt, kann der Einfluss der elektrischen Leitfähigkeit auf das Messergebnis besonders klein gehalten werden.

Die Divisionsschaltung 31 steuert über einen Steuerausgang 34 einen Strom durch ein Anzeigeinstrument 35.

Die Schaltungsanordnung sollte mit den Vorwiderständen 22, 23, 24 zweckmässig so dimensioniert sein, dass die Phasenwinkel 15° - 20° nicht überschreiten. In diesem Falle sind die Beziehungen, die in der Einrichtung gebildet werden annähernd linear, da der Tangens des Phasenwinkels annähernd gleich dem Bogenmass dieses Winkels ist.

## Patentansprüche

1. Einrichtung zur kapazitiven Messung des Füllstandes eines Mediums in einem Behälter, mit
a) einem Messkondensator (1), der so ausgebildet und angeordnet ist, dass er nach Massgabe des Füllstandes in das Medium eintaucht,

b) mehreren Kompensationskondensatoren (2, 3), von denen ein Kompensationskondensator (2) das Medium als Dielektrikum enthält,
c) einer Spannungsquelle (11) zur Beaufschlagung der Kondensatoren (1, 2, 3) mit Sinusspannungen, sowie
d) Mitteln (4 bis 9, 12) zur Kompensation des Einflusses des Wirkanteils der Kondensatorimpedanzen auf das Messergebnis,
dadurch gekennzeichnet, dass
e) zwei Kompensationskondensatoren (2, 3) vorgesehen sind, wobei die Kapazität des anderen Kompensationskondensators (3) gleich derjenigen des Messkondensators (1) sowie gleich derjenigen des einen Kompensationskondensators (2) ist, wenn das Dielektrikum des Messkondensators (1) und des einen Kompensationskondensators (2) von Luft gebildet ist,
f) die Mittel zur Kompensation folgende Bestandteile aufweisen:
(i) einen Phasenschieber (12) zur Erzeugung einer gegenüber der Ausgangsspannung der Spannungsquelle (11) um 90° phasenverschobenen Referenzspannung,
(ii) jeweils eine aus einem der Kondensatoren (1, 2, 3) und einem Widerstand (7, 8, 9) gebildete Reihenschaltung, wobei die einzelnen Reihenschaltungen parallel zueinander an die Spannungsquelle (11) angeschlossen sind,
(iii) jeweils eine jeweils einem der Kondensatoren (1, 2, 3) zugeordnete Wechselspannungs-Multiplikationsschaltung (4, 5, 6) mit Tiefpasscharakteristik zur Multiplikation der Referenzspannung mit der Spannung am Verbindungspunkt zwischen dem jeweils zugehörigen Kondensator und dem zu diesem in Reihe geschalteten Widerstand, wobei die Ausgangsspannungen der einzelnen Wechselspannungs-Multiplikationsschaltungen die Kapazität $C_M$ des Messkondensators (1) bzw. die Kapazitäten $C_K$ und $C_O$ der beiden Kompensationskondensatoren (2, 3) repräsentieren, und dass
g) eine Auswerteschaltung (10, 16-21) zur Ermittlung des Füllstandes h aus den Ausgangsspannungen der Wechselspannungs-Multiplikationsschaltungen entsprechend folgender Beziehung vorgesehen ist:

$$h \sim \frac{C_M - C_O}{C_K - C_O}$$

2. Einrichtung zur kapazitiven Messung des Füllstandes eines Mediums in einem Behälter, mit
a) einem Messkondensator (1), der so ausgebildet und angeordnet ist, dass er nach Massgabe des Füllstandes in das Medium eintaucht,
b) mehreren Kompensationskondensatoren (2, 3), von denen ein Kompensationskondensator (2) das Medium als Dielektrikum enthält,
c) einer Spannungsquelle (11) zur Beaufschlagung der Kondensatoren (1, 2, 3) mit Sinusspannungen, sowie

d) Mitteln (4 bis 9, 12) zur Kompensation des Einflusses des Wirkanteils der Kondensatorimpedanzen auf das Messergebnis,

dadurch gekennzeichnet, dass

e) zwei Kompensationskondensatoren (2, 3) vorgesehen sind, wobei die Kapazität des anderen Kompensationskondensators (3) gleich derjenigen des Messkondensators (1) sowie gleich derjenigen des einen Kompensationskondensators (2) ist, wenn das Dielektrikum des Messkondensators (1) und des einen Kompensationskondensators (2) von Luft gebildet ist,

f) die Mittel zur Kompensation folgende Bestandteile aufweisen:

    (i) jeweils eine aus einem der Kondensatoren (1, 2, 3) und einem Widerstand (22, 23, 24) gebildete Reihenschaltung, wobei die einzelnen Reihenschaltungen parallel zueinander an die Spannungsquelle (25) angeschlossen sind,

    (ii) jeweils einen jeweils einem der Kondensatoren zugeordneten Rechteckimpulsformer (26, 27, 28) zur Erzeugung einer Rechteckspannung mit einer der Phasenlage der Sinusspannung am zugehörigen Kondensator entsprechenden Phasenlage,

    (iii) zwei Logik-Glieder (29, 30) zur Erzeugung eines der Phasendifferenz $\varphi_M - \varphi_O$ der Sinusspannungen am Messkondensator (1) und am anderen Kompensationskondensator (3) entsprechenden ersten Signals sowie zur Erzeugung eines der Phasendifferenz $\varphi_K - \varphi_O$ der Sinusspannungen am einen und am anderen Kompensationskondensator (2, 3) entsprechenden zweiten Signals jeweils aus den Rechteckspannungen der Rechteckimpulsformer (26, 27, 28),

g) eine Auswerteschaltung (31) zur Bildung des Quotienten aus dem ersten und zweiten Signal vorgesehen ist, und ausserdem auch

h) die Frequenz der Spannungsquelle (25) so gewählt ist, dass der Einfluss des erwähnten Wirkanteils auf das Messergebnis minimal ist.

3. Einrichtung nach Anspruch 1, dadurch gekennzeichnet, dass jede Wechselspannungs-Multiplikationsschaltung (4, 5, 6) mit einem Tiefpass mit einer Eckfrequenz kleiner als die doppelte Frequenz der Spannung der Spannungsquelle (11) versehen ist.

4. Einrichtung nach Anspruch 1 oder 3, dadurch gekennzeichnet, dass die Auswerteschaltung einen Regelverstärker (10) mit regelbarem Verstärkerfaktor aufweist, über den die Reihenschaltungen aus einem der Kondensatoren (1, 2, 3) und einem Widerstand (7, 8, 9) an der Spannungsquelle (11) liegen, sowie drei Differenzverstärker (16, 18, 19), wobei die Eingänge des ersten Differenzverstärkers (16) an die Ausgänge (13, 15) der Wechselspannungs-Multiplikationsschaltungen (4, 6), in denen die den Kapazitäten des Messkondensators (1) und des anderen Kompensationskondensators (3) proportionalen Spannungen gebildet werden, zur Bildung des Zählers obiger Beziehung angeschlossen sind, wobei die Eingänge des zweiten Differenzverstärkers (18) an die Ausgänge (14, 15) der Wechselspannungs-Multiplikationsschaltungen (5, 6), in denen die den Kapazitäten des einen und des anderen Kompensationskondensators proportionalen Spannungen gebildet werden, zur Bildung des Nenners obiger Beziehung angeschlossen sind, und wobei die Eingänge des dritten Differenzverstärkers (19) an den Ausgang des zweiten Differenzverstärkers (18) und an eine Referenzspannung angeschlossen sind, während sein Ausgang mit dem Steuereingang (21) des Regelverstärkers (10) zur Bildung des Quotienten der obigen Beziehung als Ausgangsspannung des ersten Differenzverstärkers (16) rückgekoppelt ist.

5. Einrichtung nach Anspruch 2, dadurch gekennzeichnet, dass die Auswerteschaltung (31) zum Dividieren von Gleichspannungen ausgebildet ist und dass zwischen den Ausgängen der Logik-Glieder (29, 30) und der Auswserteschaltung (31) je ein Integrator (32, 33) angeordnet ist.

## Claims

1. Apparatus for the capacitive measuring of the level of a medium in a container, with

    a) a measuring capacitor (1) which is so constructed and arranged that it is immersed in the medium in accordance with the level,

    b) a plurality of compensation capacitors (2, 3) of which one compensation capacitor (2) contains the medium as dielectric,

    c) a voltage source (11) for applying sine-wave voltages to the capacitors (1, 2, 3), also

    d) means (4 to 9, 12) for compensation for the influence of the effective part of the capacitor impedance on the measurement result,

characterised in that

    e) two compensation capacitors (2, 3) are provided, the capacitance of the other compensation capacitor (3) being equal to that of the measuring capacitor (1) and also equal to that of the one compensation capacitor (2) when the dielectric of the measuring capacitor (1) and of the one compensation capacitor (2) is formed of air,

    f) the means for effecting compensation comprise the following components:

        (i) a phase shifter (12) for producing a reference voltage phase-displaced relatively to the output voltage of the voltage source (11) by 90°,

        (ii) series connection arrangements each formed of one of the capacitors (1, 2, 3) and one resistor (7, 8, 9), the individual series connection arrangements being connected in parallel with one another to the voltage source (11), (iii) respective a.c. voltage multiplication circuits (4, 5, 6) with a low-pass characteristic and each associated with one of the capacitors (1, 2, 3), for multiplication of the reference voltage with the voltage at the connection point between the respective associated capacitor and the resistor connected in series thereto, wherein the output voltages of the individual a.c. voltage multiplication circuits represent the capacitance $C_M$ of the measuring capacitor (1) and, respectively, the capacitances $C_K$ and $C_O$ of the two compensation capacitors (2, 3), and that

g) an evaluation circuit (10, 16-21) is provided for ascertaining the level h from the output voltages of the a.c. voltage multiplication circuits in accordance with the following equation or expression:

$$h \sim \frac{C_M - C_O}{C_K - C_O}$$

2. Apparatus for the capacitive measuring of the level of a medium in a container, with

a) a measuring capacitor (1) with is so constructed and arranged that it is immersed in the medium in accordance with the level,

b) a plurality of compensation capacitors (2, 3) whereof one compensation capacitor (2) contains the medium as dielectric,

c) a voltage source (11) for applying sine-wave voltages to the capacitors (1, 2, 3), also

d) means (4 to 9, 12) for compensating for the influence of the effective part of the capacitor impedances on the measurement result,
characterised in that

e) two compensation capacitors (2, 3) are provided, the capacitance of the other compensation capacitor (3) being equal to that of the measuring capacitor (1) and likewise equal to that of the one compensation capacitor (2) when the dielectric of the measuring capacitor (1) and of the one compensation capacitor (2) is formed of air,

f) the means for effecting compensation comprise the following components:

(i) a respective series connection arrangement formed in each case of one of the capacitors (1, 2, 3) and of a resistor (22, 23, 24), the individual series connection arrangements being connected in parallel with one another to the voltage source (25),

(ii) a respective square-wave pulse shaper (26, 27, 28) associated each with one of the capacitors, for producing a square-wave voltage with a phase position corresponding to the phase position of the sine-wave voltage at the associated capacitor,

(iii) two logic elements (29, 30) for producing a first signal corresponding to the phase difference $\varphi_M - \varphi_O$ of the sine-wave voltages at the measuring capacitor (1) and at the other compensation capacitor (3), likewise for producing a second signal which corresponds to the phase difference $\varphi_K - \varphi_O$ of the sine-wave voltages at one compensation capacitor (2) and at the other compensation capacitor (3), respectively from the square-wave voltages of the square-wave pulse shapers (26, 27, 28),

g) an evacuation circuit (31) for forming the quotient from the first and second signals is provided, and moreover

h) the frequency of the voltage source (25) is so chosen that the influence of the aforesaid effective part on the measurement result is minimal.

3. Apparatus according to claim 1, characterised in that each a.c. voltage multiplication circuit (4, 5, 6) with a low pass filter is provided with a cut-off frequency smaller than twice the frequency of the voltage of the voltage source (11).

4. Apparatus according to claim 1 or 3, characterised in that the evaluation circuit comprises a control amplifier (10) with a regulatable amplification factor, through which the series connection arrangements each comprising a capacitor (1, 2, 3) and a resistor (7, 8, 9) are connected to the voltage source (11), also three differential amplifiers (16, 18, 19), and the inputs of the first differential amplifier (16) are connected to the outputs (13, 15) of the a.c. voltage multiplication circuits (4, 6), in which the voltages proportional to the capacitance of the measuring capacitor (1) and of the other compensation capacitor (3) are formed, for forming the numerator of the above-mentioned expression, and the inputs of the second differential amplifier (18) are connected to the outputs (14, 15) of the a.c. voltage multiplication circuits (5, 6), in which the voltages proportional to the capacitances of the respective compensation capacitors are formed, for forming the denominator of the above-mentioned expression, and the inputs of the third differential amplifier (19) are connected to the output of the second differential amplifier (18) and to a reference voltage, whilst its output is connected in a feedback manner to the control input (21) of the control amplifier (10) for forming the quotient of the aforesaid expression as output voltage of the first differential amplifier (16).

5. Apparatus according to claim 2, characterised in that the evaluation circuit (31) is constructed for dividing d.c. voltages, and that one integrator (32, 33) in each case is arranged between the outputs of the logic elements (29, 30) and the evaluation circuit (31).

**Revendications**

1. Dispositif de mesure capacitive du niveau de remplissage d'un milieu dans un récipient, comportant:

a) un condensateur de mesure (1), qui est agencé et disposé de manière à plonger dans le milieu après détermination du niveau de remplissage,

b) plusieurs condensateurs de compensation (2, 3), dont un condensateur de compensation (2) contient le milieu comme diélectrique et

c) une source de tension (11) pour appliquer aux condensateurs (1, 2, 3) des tensions sinusoïdales, ainsi que

d) des moyens (4 à 9, 12) pour la compensation de l'influence de la fraction active des impédances des condensateurs sur le résultat de mesure, caractérisé en ce que:

e) il est prévu deux condensateurs de compensation (2, 3), la capacité de l'autre condensateur de compensation (3) étant égale à celle du condensateur de mesure (1) et aussi égale à celle d'un des condensateurs de compensation (2), lorsque le diélectrique du condensateur de mesure (1) et celui d'un condensateur de compensation (2) sont formés par de l'air,

f) les moyens de compensation comportent les composants suivants:

(i) un déphaseur (12) pour produire une tension de référence déphasée de 90° par rapport à la tension de sortie de la sortie de la source de tension (11),

(ii) respectivement un circuit-série constitué par un des condensateurs (1, 2, 3) et par une résistance (7, 8, 9), les différents circuits-serie étant reliés en parallèle à la source de tension (11),

(iii) respectivement un circuit de multiplication de tension alternative (4, 5, 6) associé aux condensateurs (1, 2, 3) et possédant une caractéristique de filtrage passe-bas pour une multiplication de la tension de référence avec la tension au point de jonction entre le condensateur respectivement associé et la résistance branchée en série avec celui-ci, auquel cas les tensions de sortie des différents circuits de multiplication de tension alternative représentent la capacité $C_M$ du condensateur de mesure 1 ou bien les capacités $C_K$ et $C_O$ des deux condensateurs de compensation (2, 3), et en ce que

g) il est prévu un circuit d'évaluation (10, 16-21) pour déterminer le niveau de remplissage (h) à partir des tensions de sortie des circuits de multiplication de tension alternative en correspondance à la relation suivante:

$$ h \sim \frac{C_M - C_O}{C_K - C_O} $$

2. Dispositif de mesure capacitive du niveau de remplissage d'un milieu dans un récipient, comportant

a) un condensateur de mesure (1), qui est agencé et disposé de manière à plonger dans le milieu après détermination du niveau de remplissage,

b) plusieurs condensateurs de compensation (2, 3), dont un condensateur de compensation (2) contient le milieu comme diélectrique et

c) une source de tension (11) pour appliquer aux condensateurs (1, 2, 3) des tensions sinusoïdales, ainsi que

d) des moyens (4 à 9, 12) pour la compensation de l'influence de la fraction active des impédances des condensateurs sur le résultat de mesure, caractérisé en ce que:

e) il est prévu deux condensateurs de compensation (2, 3), la capacité de l'autre condensateur de compensation (3) étant égale à celle du condensateur de mesure (1) et aussi égale à celle d'un des condensateurs de compensation (2), lorsque le diélectrique du condensateur de mesure (1) et celui d'un condensateur de compensation (2) sont formés par de l'air,

f) les moyens de compensation comportent les composants suivants:

(i) respectivement un circuit-série constitué par un des condensateurs (1, 2, 3) et une résistance (22, 23, 24)

(ii) respectivement un convertisseur d'impulsions rectangulaires (26, 27, 28) associé à un des condensateurs précités pour produire une tension rectangulaire ayant une position de phase correspondant à la position de phase de la tension sinusoïdale appliquée aux condensateurs associés,

(iii) deux organes logiques (29, 30) pour produire un premier signal correspondant à la différence de phase $\varphi_M - \varphi_O$ des tensions sinusoïdales appliquées au condensateur de mesure (1) et à l'autre condensateur de compensation (3) ainsi que pour produire un second signal correspondant à la différence de phase $\varphi_K - \varphi_O$ des tensions sinusoïdales appliquées à l'un et à l'autre condensateur de compensation (2, 3), respectivement à partir des tensions rectangulaires des convertisseurs d'impulsions rectangulaires (26, 27, 28),

g) un circuit d'évaluation (31) pour former le quotient du premier et du second signal, et en outre également en ce que:

h) la fréquence de la tension d'alimentation (25) est choisie de telle sorte que l'influence de la fraction active précitée sur le résultat de mesure soit minimale.

3. Dispositif selon la revendication 1, caractérisé en ce que chaque circuit de multiplication de tension alternative (4, 5, 6) est pourvue d'un filtre passe-bas ayant une fréquence limite inférieure au double de la fréquence de la tension de la source de tension (11).

4. Dispositif selon l'une des revendications 1 ou 3, caractérisé en ce que le circuit d'évaluation comporte un amplificateur de régulation (10) ayant un facteur d'amplification réglable et par l'intermédiaire duquel les combinaisons-série d'un des condensateurs (1, 2, 3) et d'une résistance (7, 8, 9) sont reliées à la source de tension (11), ainsi que trois amplificateurs de différences (16, 18, 19), auquel cas les entrées du premier amplificateur de différence (16) sont reliées aux sorties (13, 15) des circuits de multiplication de tension alternative (4, 6), dans lesquels sont engendrées les tensions proportionnelles aux capacités du condensateur de mesure (1) et de l'autre condensateur de compensation (3), en vue de l'établissement du numérateur de la relation précitée, auquel cas les entrées du second amplificateur de différence (18) sont reliées aux sorties (14, 15) des circuits de multiplication de tension alternative (5, 6) dans lesquels sont engendrées les tensions proportionnelles aux capacités de l'un et de l'autre condensateur de compensation en vue de la formation du dénominateur de la relation précitée, et auquel cas les entrées du troisième amplificateur de différence (19) sont reliées à la sortie du second amplificateur de différence (18) et à une tension de référence, tandis que sa sortie est reliée en couplage réactif avec l'entrée de commande (21) de l'amplificateur de régulation (10) pour l'établissement du quotient de la relation précitée sous la forme d'une tension de sortie du premier amplificateur de différence (16).

5. Dispositif selon la revendication 2, caractérisé en ce que le circuit d'évaluation (31) est agencé pour une division de tensions continues et en ce qu'il est prévu respectivement un intégrateur (32, 33) entre les sorties des organes logiques (29, 30) et le circuit d'évaluation (31).

FIG. 1

0 029 485

FIG. 2